Europäisches Patentamt

European Patent Office

Office européen des brevets

(19)

(11) Veröffentlichungsnummer : **0 247 235 B1**

(12) **EUROPÄISCHE PATENTSCHRIFT**

(45) Veröffentlichungstag der Patentschrift :
11.01.89

(21) Anmeldenummer : 86115382.3

(22) Anmeldetag : 06.11.86

(51) Int. Cl.⁴ : **F 23 K 3/02, B 65 G 53/22**

(54) Druckluftförder- und Dosiereinrichtung.

(30) Priorität : 23.05.86 DE 3617352

(43) Veröffentlichungstag der Anmeldung :
02.12.87 Patentblatt 87/49

(45) Bekanntmachung des Hinweises auf die Patenterteilung : 11.01.89 Patentblatt 89/02

(84) Benannte Vertragsstaaten :
AT BE CH DE ES FR GB GR IT LI NL SE

(56) Entgegenhaltungen :
EP--A-- 0 063 629
EP--A-- 0 130 316
WO--A--81 /027 73
DE--A-- 2 800 320
US--A-- 4 250 816

(73) Patentinhaber : Ruhrkohle-Carborat GmbH
Windmühlenweg
D-4152 Kempen 3 / Tönisberg (DE)

(72) Erfinder : Lüttger, Hans
Werdener Strasse 63
D-4200 Oberhausen 1 (DE)

**Beschreibung**

Die Erfindung betrifft ein Verfahren zum Fluidisieren und zum Einblasen von Kohlenstaub und Druckluft in die Förder- und Dosierleitung eines Kupolofens, wobei das Transportgut in einen Behälter fluidisiert und mittels Düsen aus dem fluidisierten Bereich intermittierend in die Förder- und Dosierleitung geblasen wird.

Nach einem älteren Vorschlag der Anmelderin wird das Transportgut in einem Behälter fluidisiert und mittels Düsen aus dem fluidisierten Bereich in die Förder- und Dosierleitung geblasen. Dieser Vorschlag hat sich in der Praxis nicht bewährt. Betriebsschwierigkeiten traten insbesondere beim Eintragen von Kohlenstaub in Kupolöfen ein. Im einzelnen ergaben sich sowohl Schwierigkeiten bei der Einstellung eines definierten Kohleeintrags als auch bei der Regelung. Besonders gravierend waren die Schwierigkeiten im Schwachlastbereich.

In der Vergangenenheit sind mit den verschiedensten am Markt bekannten Geräten Versuche unternommen worden, die Kohlenstaubeinblasung in Kupolöfen mit befriedigendem Ergebnis darzustellen. Alle diese Versuche sind gescheitert. Als wesentliche Ursachen wurden auch hier Betriebsstörungen angesehen. Es traten u. a. Verstopfungen in den Förderleitungen auf.

Der Erfindung liegt daher die Aufgabe zugrunde, ein Verfahren zur Fluidisierung und zum Einblasen von Kohlenstaub in die Förder- und Dosierleitung eines Kupolofens zu schaffen, welches in den für einen Kupolofen notwendigen Regelungsbereichen einen zuverlässigen Eintrag von Kohlenstaub erlaubt. Dabei wendet sich die Erfindung erneut dem älteren, oben beschriebenen Vorschlag zu. Nach der Erfindung wird intermittierend geblasen, wobei zwischen den Förderintervallen nur Druckluft in die Förder- und Dosierleitung geblasen wird. Die erfindungsgemäße Gestaltung der Einblasintervalle hat deshalb Erfolg, weil die Intervalle enden können, bevor die Gefahr einer Verstopfung eintritt. Damit löst sich die Erfindung von der bisherigen Vorstellung, in Kupolöfen kontinuierlich einblasen zu müssen. Vielmehr wurde als ausreichend festgestellt, daß die Blastakte in kurzer Folge eintraten.

Allerdings hat sich die Erfindung nicht darauf beschränkt, den bis dahin kontinuierlich vorgesehenen Eintrag zu stückeln. Zwischen den Blastakten wird nach der Erfindung mit Druckluft leer weitergeblasen. Vorteilhafterweise bewirkt dieses Zwischenblasen eine Reinigung der Förderleitungen.

Beim Fördern gegen Gegendruck (beim Kupolofen ist der Gegendruck relativ gering) wird ein Druckverlust im Kupolofen bzw. Ausblasen aus dem Kupolofen dadurch verhindert, daß zwischen den einzelnen Kohlenstaub-Blasintervallen mit Druckluft geblasen wird. Wahlweise kann der Betrieb auch so eingerichtet werden, daß zwischen den einzelnen Blasintervallen einer Düse in Intervallen aus einer weiteren Düse in die gleiche Dosier- und/oder Förderleitung für Kohlenstaub geblasen wird.

Dies System ist auch auf andere staubförmige Transportgüter anwendbar.

Zur Durchführung des erfindungsgemäßen Verfahrens ist mindestens ein Fluidisierungsbehälter mit mindestens einer in eine Förder- und/oder Dosierleitung blasenden Düse mit Druckluftzuführung vorgesehen, wobei in der Druckluftzuführung ein Mehrwegeventil mit Intervallsteuerung angeordnet ist und von dem Mehrwegeventil ein Bypass für Druckluft zur Förder- und/oder Dosierleitung führt und in Bewegungsrichtung des Transportgutes vor dem Drucklufteintritt in der Dosier- und/oder Förderleitung ein Schieber vorgesehen ist. Während eines Förderintervalls kann wahlweise aus einer Druckluftleitung Druckluft der Fluidisierung und zugleich der Düse zugeführt werden. Die Fluidisierung erfolgt in der Weise, daß der Behälterboden doppelwandig ausgelegt und der Zwischenraum zwischen beiden Böden mit der Druckluft beaufschlagt wird. Die Druckluft tritt dann durch Öffnungen im innenliegenden Behälterboden in den Behälter ein und lockert die darüberliegenden Fördergutpartikel stark auf. Infolge der Auflockerung werden die Partikel fließfähig. Durch die Fließfähigkeit und auch aufgrund eines Druckgefälles an der Düse bewegen sich Transportgutpartikel in den Eintrittsbereich der Düse, die als Strahldüse ausgelegt ist. D. h. von der aus der Düse in die Förder- und/oder Dosierleitung austretenden Druckluft wird in einem offenen Spalt zwischen Düse und Förder- und/oder Dosierleitung ein Unterdruck erzeugt. Durch Veränderung des Spaltes wird das Eintreten der Förderpartikel beeinflußt. Dazu ist die Düse gegenüber der Förder- und/oder Dosierleitung einstellbar oder umgekehrt.

Vorteilhafterweise können die Betriebsbedingungen für das Blasintervall optimal gewählt werden. Das gewährleistet ein Höchstmaß an Sicherheit und Genauigkeit für das Blasintervall. Die Förderleistung kann über die Intervallänge geregelt werden. Die Intervallänge läßt sich steuern mit einem Zeitglied. Vorzugsweise erfolgt das elektrisch. Das Zeitglied schaltet dann nach Ablauf des Blasintervalles das Mehrwegeventil um. Die Druckluftzuführung zu dem Fluidisierungsbehälter wird gesperrt. Zugleich kann das Mehrwegeventil auf eine andere Druckluftleitung umschalten, die außerhalb des Fluidisierungsbehälters in die Dosier- und/oder Förderleitung mündet. Infolgedessen wird der Luftdruck in der Dosier- und/oder Förderleitung nicht abgebaut. Während dieses Intervalls bis zum nächsten Blasintervall wird die Förder- und/oder Transportleitung zum Fluidisierungsbehälter hin verschlossen. Dazu kann ein z. B. als Kugelventil ausgebildeter Schieber dienen. Dieser Schieber und das Mehrwegeventil besitzen wahlweise eine gemeinsame Steuerung.

Die Anwendung der erfindungsgemäßen Vorrichtung auf einen Kupolofen macht es erforderlich, daß mehrere Einblasstellen mit Kohlenstaub bedient werden. Nach der Erfindung ist für jede der Einblasstellen mindestens eine separate Düse vorgesehen. Wahlweise können auch zwei oder mehr Düsen auf eine Einblasstelle wirken. Dann schließen sich die Blasintervalle dieser Düsen aneinander.

In weiterer Ausbildung der Erfindung ist für alle Düsen jedoch ein gemeinsamer Fluidisierungsbehälter vorgesehen. In diesem gemeinsamen Fluidisierungsbehälter besitzt jede Düse eine separate Kammer. Damit ist sichergestellt, daß die einzelnen Blasvorgänge einander nicht beeinflussen.

Die verschiedenen Kammern entstehen z. B. durch sternförmige Unterteilung des Behälterinnenraumes. Eine ausreichende Sicherheit gegen eine unerwünschte Beeinflussung der einzelnen Blasvorgänge untereinander entsteht bei einer Höhe des Einsatzes von mindestens 200 mm. Oberhalb dieser Höhe kann das Transportgut einen für alle Kammern gemeinsamen Schüttkegel bilden. Das erlaubt eine gemeinsame Befüllung aller Kammern z. B. über eine zentrische, oben angeordnete Transportgutzuführung, die in der Behältermitte den Transportgutschüttkegel entstehen läßt.

Die Anzahl der Kammern beträgt bei einem Behälterdurchmesser von 400 bis 1000 mm 4-12. Die Kammern können auch durch einen separaten Einsatz im Fluidisierungsbehälter gebildet werden.

Der Behälterboden bildet zur ausreichend gleichmäßigen Verteilung von Druckluft einen Hohlraum mit mindestens 200 mm Abstand vom Fluidisierungsboden. Der Fluidisierungsboden besteht aus 1-5 mm dicken, gelochten Blechen. Anstelle der gelochten Bleche können auch Stahlgewebe verwendet werden. Vorzugsweise wirken zwei der Bleche oder ausreichend steife Stahlgewebe mit einem zwischenliegenden Textilgewebe zusammen.

Schließlich findet sich an den Düsen der erfindungsgemäßen Vorrichtung noch eine Besonderheit. Die Düsen sind zusammen mit einem Anschluß für deren Druckluftzuführung und einem Anschluß für die Förder- und/oder Dosierleitung in einen gemeinsamen Flansch angeordnet. Dadurch ergeben sich bauliche Vorteile. Im wesentlichen sind diese Vorteile durch bessere Montierbarkeit und Wartungsfreundlichkeit gekennzeichnet. Der Fluidisierungsbehälter besitzt Öffnungen, durch die bei der Montage dieser Flansche die Düse nach innen in den Behälter eingeführt wird. Bei Befestigung dieser Flansche am Behälter, ggf. an Anschlußflanschen des Behälters, sind die Düse, die Anschlüsse für deren Druckluftzuführung und die Anschlüsse für die Förder- und/oder Transportleitung zugleich mitbefestigt, d. h. bedürfen keiner zusätzlichen Handhabung mehr. Entsprechendes gilt für das Lösen dieser Flansche.

Wahlweise liegen die Druckluftzuleitungen für die Düsen in den Behäterstützen bzw. bilden die Druckluftzuleitungen zugleich die Behälterstützen oder umgekehrt.

In der Zeichnung ist ein Ausführungsbeispiel der Erfindung dargestellt. Es zeigen :

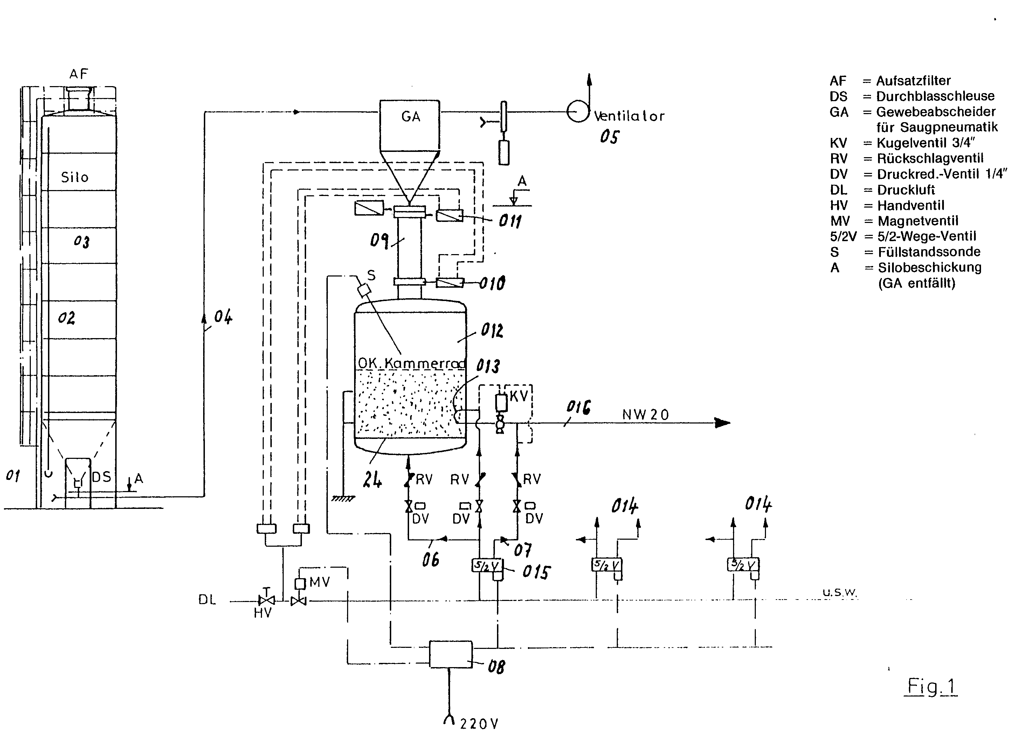

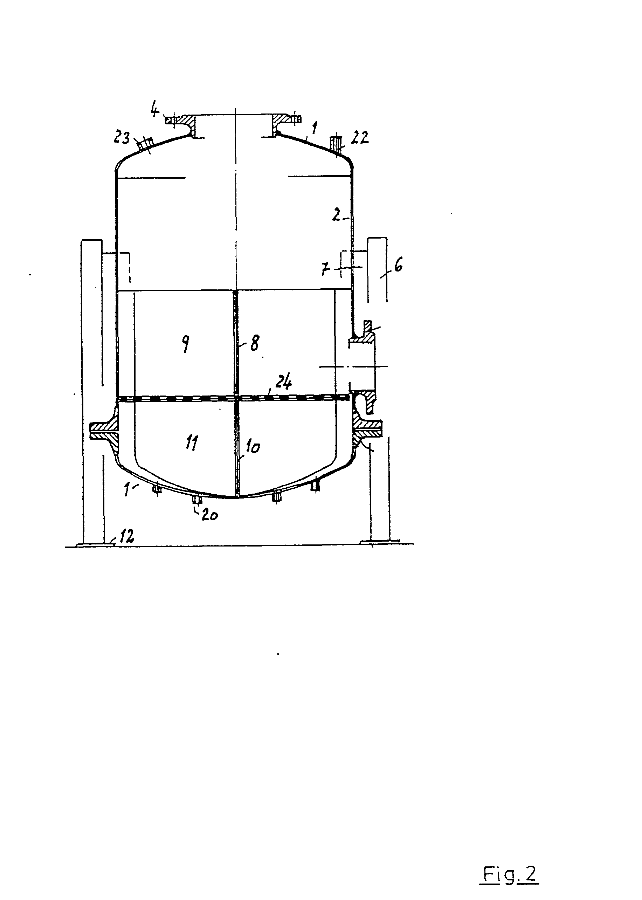

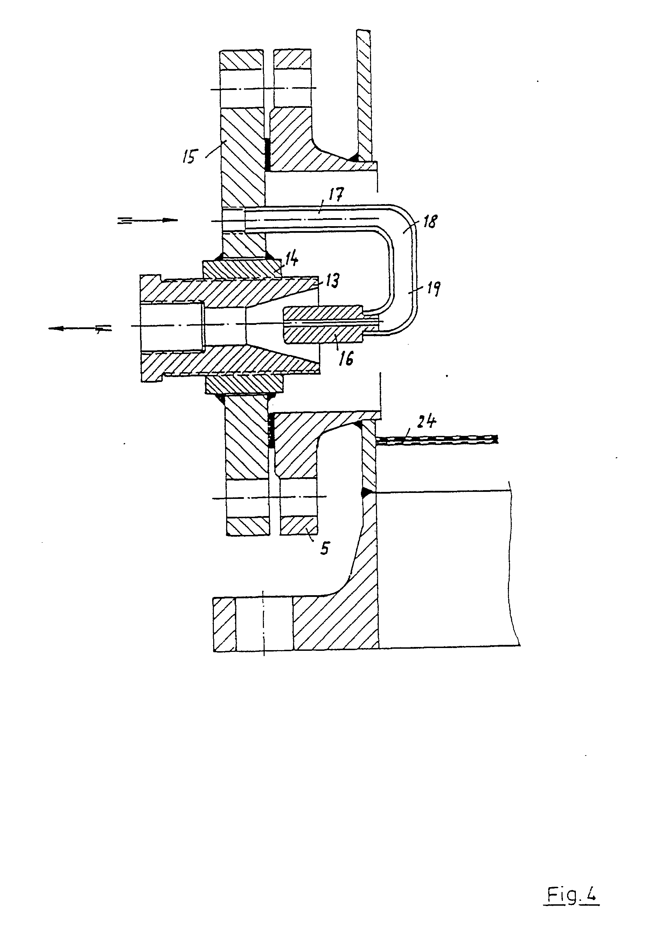

Figur 1 eine schematische übersicht der erfinderungsgemäßen Vorrichtung Figuren 2-4 Einzelheiten der Vorrichtung nach Figur 1.

In Figur 1 ist mit 03 ein Silo bezeichnet. Zum Befüllen des Silos 03 dient eine Leitung 02 mit Eintritt 01. Es handelt sich um einen Kohlenstaubsilo. Der Kohlenstaub wird eingeblasen. Die beim Einblasen verwendete Trägerluft entweicht bei AF ins Freie. Der Kohlenstaub wird dabei durch ein geeignetes Filter zurückgehalten.

Die Beschickung der erfindungsgemäßen Vorrichtung erfolgt über eine Saugpneumatik. Zur Saubpneumatik gehören eine Saugleitung 04, ein Gewebeabscheider GA und ein Saugventilator 05. Am Siloaustritt befindet sich eine geeignete Schleuse. Außerdem sind zwischen dem Gewebeabscheider GA und dem Saugzugventilator 05 ein nicht näher bezeichneter Absperrschieber und Drosselorgan angeordnet.

Aus dem Gewebeabscheider GA gelangt der von der Trägerluft befreite Kohlenstaub in eine Schleusenkammer 09. Die Schleusenkammer 09 ist oben mit einem Schieber 011 und unten mit einem Schieber 010 gesichert. Der Schieber 011 ist im Betrieb nur dann geöffnet, wenn der Schieber 010 geschlossen ist. Vor Öffnen des Schiebers 010 wird der Schieber 011 geschlossen. Das dient dazu, einen Druckverlust im Fluidisierungsbehälter 012 zu vermeiden. Der Fluidisierungsbehälter 012 besteht aus zwei Klöpperböden 1 bzw. Deckel, von denen der untere einen Flansch besitzt und der obere Flansch 4 mit einem zylinderischen Behälter-Teil 2 verschweißt ist, welcher nach unten hin mit einem Gegenstück für den Flansch versehen ist. Der zylinderische Behälter-Teil 2 besitzt außerdem 6 gleichmäßig am Umfang angeordnete Öffnungen mit Flanschen 5 im unteren Bereich.

Im Behälter-Teil 2 befinden sich ein Fluidisierungsboden 24 und ein Einsatz. Der Einsatz wird durch sternförmig angeordnete Bleche 8 und 9 gebildet. Die Bleche 8 und 9 unterteilen den Innenraum des Fluidisierungsbehälters im Ausführungsbeispiel bis zu einer Höhe von 270 mm in sechs gleiche Kammern, von denen jede Kammer einer Öffnung mit Flansch 5 zugeordnet ist.

Der Fluidisierungsboden 24 besteht aus jeweils 4 mm starken Lochblechen mit 2 mm starker Gewebezwischenlage.

Der Fluidisierungsbehälter 012 wird von Stützen 6 getragen. Es sind drei jeweils gleichmäßig verteilt am Umfang angeordnete Stützen 6 vorgesehen, die über Stegbleche 7 mit dem Behälter verbunden sind. Die Stützen 6 bilden zugleich Druckluftzuleitungen, welche nachfolgend noch erörtert werden. Unten sind die Stützen 6 mit Füßen 12 versehen.

Der Behälterboden 1 ist zugleich als Fluidisierungsboden ausgebildet. Dabei ist jeder Kammer im Behälterteil 2 im Boden ein Fluidisierungsbereich zugeordnet. Dies entsteht durch Bleche 10 und 11, welche genau unterhalb den Blechen 8 und 9 angeordnet sind. Die Bleche 8 und 9 und die Bleche 10 und 11 haben eine vorteilhafte Wirkung auf den Fluidisierungsboden 24, indem sie die Lochbleche stützen bzw. zwischen sich einspannen. Das vereinfacht und erleichtert die Konstruktion der Lochbleche. Es können vorteilhafterweise sehr geringe Wandstärken für die Lochbleche verwendet werden.

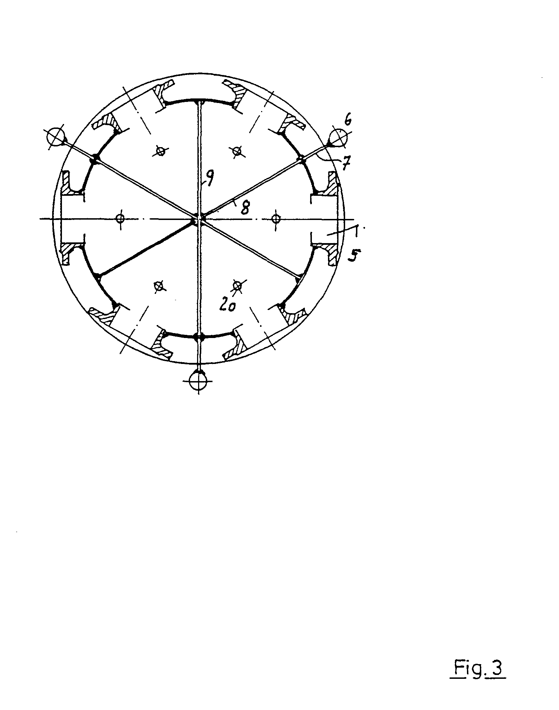

Jeder Fluidisierungskammer im Behälterboden 1 ist eine Druckluftzuführung mit einem Anschluß 20 zugeordnet. Wie aus Figur 3 ersichtlich ist, ist der Druckluftanschluß 20 etwa mittig am Behälterboden angebracht. Die Anschlüsse 20 fluchten mit den Mittellinien der zu den Flanschen 5 gehörenden Behälteröffnungen. Die Stegbleche 7 fluchten ihrerseits mit den Blechen 8 bzw. 9. Die zu den Flanschen 5 gehörenden Öffnungen liegen jeweils mittig zwischen zwei Stegblechen 8 und 9.

Die Gesamthöhe des Behälters 012 einschließlich dessen Anschlußflansch gegenüber dem Schieber 010 beträgt im Ausführungsbeispiel 1140 mm bei einer Bodenfreiheit von 119 mm, einem Durchmesser von ca. 609 mm, ca. 300 mm Abstand zwischen dem Behälterboden und dem Fluidisierungsboden 24.

Oben am Behälterboden 1 ist ein Anschluß 23 für eine Füllstandssonde S vorgesehen, ferner ein Anschluß 22 für Druckmeßeinrichtung und/oder Sicherheitsventil und/oder Auslaßventil.

Für jeden Flansch 5 ist ein Gegenflansch 15 vorgesehen. Jeder Gegenflansch 15 ist mit einer Düse 16 versehen. Die Düse 16 ragt in ein Anschlußstück 13 für eine Förder- und/oder Dosierleitung. Das Anschlußstück 13 ist in einem Gewindestück 14 des Gegenstückes 15 verstellbar gehalten. Düse 16 und Anschlußstück 13 weisen in radialer Richtung. Dazu führt eine aus Einzelteilen 17, 18 und 19 bestehende Leitung vom Gegenstück 15 zur Düse 16. Die Leitung ist auf 1/4 Zoll ausgelegt. Die Düse 16 hat einen freien Austrittsquerschnitt von 4 mm und ist mit Gewinde auswechselbar in der Leitung gehalten.

Das Anschlußstück 16 hat eine Öffnungsweite von 40 mm und verjüngt sich über 40 mm auf einen Durchmesser von 20 mm. In den dadurch entstandenen Konus ragt die Düse 16 hinein. Die Verstellbarkeit des Anschlußstückes 13 erlaubt es, den Spalt zwischen Düse 16 und Anschlußstück 13 zu schließen.

In Figur 1 ist die Beaufschlagung des Behälters 012 mit Druckluft an einem einzigen Fluidisierungsboden und an einer einzigen Düse 013 dargestellt. Für die anderen fünf Düsen 16 und Fluidisierungskammern dienen die bei 014 schematisch dargestellten Einrichtungen.

Für die Düse 013 ist ein Mehrwegeventil 015 vorgesehen. Es handelt sich um ein 5/2-Wegeventil. Das Mehrwegeventil 015 erlaubt die gleichzeitige Beaufschlagung der Düse 013 und der zugehörigen Fluidisierungskammer über Druckleitungen 06. In den Druckleitungen 06 befinden sich jeweils ein Rückschlagventil und ein Druckreduzierungsventil von 1/4 Zoll. Durch die Druckleitung 06 dringt während eines Blasintervalls Druckluft. Die Druckluft führt zu der oben beschriebenen

Auflockerung des Kohlenstaub im Behälter 012, zum Fließen und Ansaugen des Kohlenstaubes in das Anschlußstück 13 und Abfördern des Kohlenstaubes durch die Dosier- und Förderleitung, die in Figur 1 mit 016 bezeichnet ist. Die Leitung 016 hat im Ausführungsbeispiel nach Figur 1 NW 20. Nach einer Intervallzeit von im Ausführungsbeispiel sechs Sekunden wird anschließend über die Druckluftleitung 07 nur Luft in die Leitung 016 gegeben. Gleichzeitig wird ein zwischen der Eintrittsstelle der Leitung 07 in die Leitung 016 und dem Behälter 012 vorgesehenes Kugelventil von 3 Zoll geschlossen und die Druckluftbeaufschlagung durch die Leitung 06 beendet.

Die Leitung 07 ist wie die Leitung 06 mit einem Rückschlagventil und einem Druckreduzierungsventil von 1/4 Zoll ausgerüstet.

Das Mehrwegeventil 015 für die Düse 013 wird über ein elektrisch gesteuertes Zeitglied 08 betätigt. Über das gleiche Zeitglied werden die anderen fünf Anschlüsse 014 für die am Behälter 012 vorgesehenen Düsen 16 betätigt.

Durch die verschiedenen Blasintervalle wird Kohlenstaub aus dem Behälter 012 abgefördert. Über eine Füllstandssonde S läßt sich der sich dabei ergebende jeweilige Füllstand messen. Bei Unterschreiten einer Minimalhöhe gibt die Füllstandssonde S Kontakt zur Betätigung der Schieber 010 und 011, um aus der Schleuse 09 weiteren Kohlenstaub in den Behälter 012 einzutragen.

Die Stützen 6 sind hohl ausgebildet oder werden wahlweise durch mehrere Rohrleitungen gebildet, so daß über entsprechende Anschlüsse jeweils für 2 beiderseits einer Stütze 6 angeordnete Düsen 16 und die zugehörigen Anschlüsse 20 Druckluft abgezogen werden kann.

## Patentansprüche

1. Verfahren zur Fluidisierung und zum Einblasen von Kohlenstaub mit Druckluft in die Förder- und Dosierleitung eines Kupolofens, wobei das Transportgut in einem Behälter fluidisiert und mittels Düsen aus dem fluidisierten Bereich intermittierend in die Förder- und Dosierleitung geblasen wird, dadurch gekennzeichnet, daß zwischen den Förderintervallen nur Druckluft in die Förder- und Dosierleitung (016) geblasen wird.

2. Vorrichtung zur Durchführung des Verfahrens nach Anspruch 1, gekennzeichnet durch mindestens einen Fluidisierungsbehälter (012) mit mindestens einer in eine Förder- und Dosierleitung (016) blasenden Düse (16) mit Druckluftzuführung, wobei in der Durckluftzuführung ein Mehrwegeventil (015) mit Intervallsteuerung angeordnet ist und von dem Mehrwegeventil ein Bypass (07) für Druckluft zur Förder- und Dosierleitung (016) führt und in Förderrichtung vor dem Drucklufteintritt der Leitung (07) in die Förder- und Dosierleitung (016) ein Schieber (KV) vorgesehen ist.

3. Vorrichtung nach Anspruch 2, gekennzeichnet durch eine elektrische Intervallsteuerung mit einem Zeitglied (08).

4. Vorrichtung nach Anspruch 2 oder 3, gekennzeichnet durch ein Kugelventil als Schieber (KV) in der Förder- und Dosierleitung (016).

5. Vorrichtung nach einem oder mehreren der Ansprüche 2 bis 4, gekennzeichnet durch eine gemeinsame Steuerung für den Schieber (KV) und das Mehrwegeventil (015).

6. Vorrichtung nach einem oder mehreren der Ansprüche 2 bis 5, dadurch gekennzeichnet, daß der Fluidisierungsbehälter (012) für jede Düse (16) eine separate Kammer aufweist.

7. Vorrichtung nach Anspruch 6, gekennzeichnet durch eine sternförmige Unterteilung des Behälterinnenraumes zu Kammern.

8. Vorrichtung nach Anspruch 6 oder 7, gekennzeichnet durch mindestens 4 und höchstens 12 Kammern.

9. Vorrichtung nach einem oder mehreren der Ansprüche 6 bis 8, gekennzeichnet durch einen Fluidisierungsboden (24) mit einem Gewebe zwischen Lochblechen, Rosten oder Stahlgeweben.

10. Vorrichtung nach Anspruch 9, dadurch gekennzeichnet, daß der Fluidisierungsboden (24) zwischen Stegblechen (8, 9, 10, 11) angeordnet ist.

11. Vorrichtung nach einem oder mehreren der Ansprüche 6 bis 10, dadurch gekennzeichnet, daß die Kammern eine Höhe von mindestens 200 mm aufweisen und die jeweilige Schüttguthöhe größer als die Kammerhöhe ist.

12. Vorrichtung nach einem oder mehreren der Ansprüche 2 bis 11, dadurch gekennzeichnet, daß die Düsen (16) und der Anschluß (13) für die Förder- und Dosierleitung (016) in einem gemeinsamen Flansch (15) angeordnet sind.

13. Vorrichtung nach einem oder mehreren der Ansprüche 6 bis 12, dadurch gekennzeichnet, daß die Druckluftleitung zu den Düsen (16) und/oder den Anschlüssen (20) zu den Fluidisierungskammern zugleich die Stützen (6) für den Behälter (012) bilden.

## Claims

1. Method of fluidizing and blowing-in coal dust with compressed air into the conveying and metering line of a cupola furnace, wherein the material to be conveyed is fluidized in the vessel and is blown by means of nozzles out of the fluidized zone intermittently into the conveying and metering line, characterized in that, between the conveying intervals, only pressurized air is blown into the conveying and metering line (016).

2. Apparatus for carrying out the method according to Claim 1, characterized by at least one fluidizing vessel (012) having at least one nozzle (16) with pressurized air feed, blowing into a conveying and metering line (016), a multi-way valve (015) with interval control being disposed in the pressurized air feed and a bypass (07) for pressurized air leading from the multi-way valve to the conveying and metering line (016), and a valve (KV) being provided upstream of the pressurized air inlet of the line (07) into the conveying and metering line (016).

3. Apparatus according to Claim 2, characterized by an electrical interval control with a timer (08).

4. Apparatus according to Claim 2 or 3, characterized by a ball valve as valve (KV) in the conveying and metering line (016).

5. Apparatus according to one or more of Claims 2 to 4, characterized by a common control for the valve (KV) and for the multi-way valve (015).

6. Apparatus according to one or more of Claims 2 to 5, characterized in that the fluidizing vessel (012) comprises a separate chamber for each nozzle (16).

7. Apparatus according to Claim 6, characterized by a star-shaped subdivision of the vessel interior into chambers.

8. Apparatus according to Claim 6 or 7, characterized by at least 4 and at most 12 chambers.

9. Apparatus according to one or more of Claims 6 to 8, characterized by a fluidizing base (24) having a fabric between perforated plates, gratings or steel mesh fabrics.

10. Apparatus according to Claim 9, characterized in that the fluidizing base (24) is disposed between web plates (8, 9, 10, 11).

11. Apparatus according to one or more of Claims 6 to 10, characterized in that the chambers have a height of at least 200 mm and the bulk material height in each case is greater than the chamber height.

12. Apparatus according to one or more of Claims 2 to 11, characterized in that the nozzles (16) and the connection (13) for the conveying and metering line (016) are disposed in one common flange (15).

13. Apparatus according to one or more of Claims 6 to 12, characterized in that the pressurized air line to the nozzles (16) and/or to the connections (20) to the fluidizing chambers at the same time form the support legs (6) for the vessel (012).

## Revendications

1. Procédé pour fluidiser et injecter par soufflage de la poussière de charbon avec de l'air comprimé dans la conduite d'alimentation et de dosage d'un cubilot, dans lequel le produit à alimenter est fluidisé dans un récipient et injecté de façon intermittente dans la conduite d'alimentation et de dosage au moyen de buses, à partir de la zone fluidisée, caractérisé en ce qu'entre les intervalles de temps consacrés à l'alimentation, on envoie dans la conduite d'alimentation et de dosage (016) de l'air comprimé seul.

2. Dispositif pour la mise en œuvre du procédé selon la revendication 1, caractérisé par au moins un récipient de fluidisation (012) présentant au moins une buse (16), avec conduite d'arrivée d'air comprimé, injectant dans une conduite d'alimentation et de dosage (016), dans lequel la conduite d'arrivée d'air comprimé comporte un robinet multivoie (015) muni d'une commande des différents intervalles de temps ; et que, du robinet multivoie, une dérivation (07) pour l'air comprimé conduit à la conduite d'alimentation et de dosage (016) ; et qu'en avant, dans le sens de l'alimentation de l'entrée de l'air comprimé de la conduite (07) dans la conduite d'alimentation et de dosage (016) est prévue une vanne (KV).

3. Dispositif selon la revendication 2, caractérisé par une commande électrique, avec élément temporisateur (08), des différents intervalles de temps.

4. Dispositif selon la revendication 2 ou 3, caractérisé par un robinet à tournant sphérique servant de vanne (KV) dans la conduite d'alimentation et de dosage (016).

5. Dispositif selon une ou plusieurs des revendications 2 à 4, caractérisé par une commande commune pour la vanne (KV) et le robinet multivoie (015).

6. Dispositif selon une ou plusieurs des revendications 2 à 5, caractérisé en ce que le récipient de fluidisation (012) présente une chambre distincte pour chaque buse (16).

7. Dispositif selon la revendication 6, caractérisé par une division en étoile de l'espace intérieur du récipient pour former des chambres.

8. Dispositif selon la revendication 6 ou 7, caractérisé par au moins quatre et au plus douze chambres.

9. Dispositif selon une ou plusieurs des revendications 6 à 8, caractérisé par un fond fluidisant (24) constitué d'une toile métallique entre des tôles perforées, des grilles ou des toiles d'acier.

10. Dispositif selon la revendication 9, caractérisé en ce que le fond fluidisant (24) est disposé entre des tôles de liaison (8, 9, 10, 11).

11. Dispositif selon une ou plusieurs des revendications 6 à 10, caractérisé en ce que les chambres présentent une hauteur d'au moins 200 mm et en ce que la hauteur respective du tas de produit en vrac est supérieure à la hauteur de la chambre.

12. Dispositif selon l'une ou plusieurs des revendications 2 à 11, caractérisé en ce que les buses (16) et le raccord (13) pour la conduite d'alimentation et de dosage (016) sont disposés dans une bride commune (15).

13. Dispositif selon l'une ou plusieurs des revendications 6 à 12, caractérisé en ce que la conduite qui amène l'air comprimé aux buses (6) et/ou aux raccords (20) pour les chambres de fluidisation forme en même temps les appuis (6) pour le récipient (012).

AF

Silo

03

02

01  DS  A

04

GA

Ventilator
05

A
011

09

011

010

S

012

OK. Kammerrad  013

24

KV

016  NW 20

RV  RV  RV

DV  DV  DV

06  07

5/2V  015

014  014

5/2V  5/2V

u.s.w.

DL  HV  MV

08

220V

AF  = Aufsatzfilter
DS  = Durchblasschleuse
GA  = Gewebeabscheider
         für Saugpneumatik
KV  = Kugelventil 3/4"
RV  = Rückschlagventil
DV  = Druckred.-Ventil 1/4"
DL  = Druckluft
HV  = Handventil
MV  = Magnetventil
5/2V = 5/2-Wege-Ventil
S   = Füllstandssonde
A   = Silobeschickung
         (GA entfällt)

EP 0 247 235 B1

Fig.1

Fig. 2

Fig. 3

Fig. 4